# EUROPEAN PATENT APPLICATION

(11) **EP 2 463 224 A1**
(43) Date of publication of application: **13.06.2012**
(21) Application number: 10194043.5
(22) Date of filing: 07.12.2010
(51) Int. Cl.: B66C 23/26, B66C 23/28, B66C 23/52, F03D 1/00, F03D 11/04

(54) **System for facilitating work to be performed on part of an off shore structure and method for installing such a system**

(71) Applicant: Ravestein Container Pontoon b.v., 6669 MB Dodewaard (NL)
(72) Inventor: Ravestein, Cornelis Gradus, 5411 NC, Zeeland (NL)
(74) Representative: Mink-Lindenburg, Charlotte Hildegard

(57) **Abstract**

System for facilitating work, such as maintenance or repair, to be performed on part of an off shore structure, such as a wind turbine, which part is situated above water level, which system comprises:
a) a work platform (20);
b) means for positioning the work platform (20) near the part of the off shore structure, wherein
the positioning means are arranged for mounting the work platform (20) onto a main platform (10) to be situated at the water level, and for lifting the work platform (20) relative to the main platform (10).
A method for installing such a system is also disclosed.

## Description

The present invention relates to a system for facilitating work to be performed on part of an off shore structure and method for installing such a system.

In practice, when for instance a wind turbines situated off shore needs work, a main platform is self propelled or towed to the location of the wind turbine. On the main platform a crane is present, which is used to allow personnel to work on the wind turbine.

However at high wind speeds the known combination of the main platform and the crane cannot be used for safety reasons.

The present invention relates to a system for facilitating work, such as maintenance or repair, to be performed on part of an off shore structure, such as a wind turbine, which part is situated above water level, which system comprises:
a) a work platform;
b) means for positioning the work platform near the part of the off shore structure.

In the International Patent Application WO2004/081373 a work platform is described that is to be suspended to a wind turbine by means of cables. The work platform is designed to define a working plane around a rotor blade for servicing such a rotor blade.

The invention has for its object to provide a system according to the preamble of claim 1, which can be used even at high wind speeds and/or high waves in a safe manner.

The system according to the invention is characterized in that the positioning means are arranged for mounting the work platform onto a main platform to be situated at the water level, and for lifting the work platform relative to the main platform.

The combination of a main platform and a work platform provides the necessary stability to operate in rough weather under safe conditions. The work platform is, contrary to WO2004/081373, not connected to the off shore structure and can therefore be positioned independently relative to the off shore structure. This allows work to be performed on the entire off shore structure. In case the off shore structure is a wind turbine work can be performed not only on the rotor blades, but also on the nacelle and the pile of the wind turbine. Furthermore due to the combination of a main platform and a work platform greater loads can be born, thus also allowing replacement of parts, such as entire rotor blades or the head of the nacelle, even with blades attached.

According to a preferred embodiment the positioning means comprise leg pieces for forming a tower onto the main platform and means for attaching the work platform to the tower and means for lifting the work platform along the tower. Advantageously the leg pieces take up less space than an entire leg would and can be transported on deck of the main platform. The tower to be formed out of the leg pieces allows a stable attachment of the work platform and also allows the possibility to lift the work platform along the tower.

According to a further preferred embodiment the work platform is rotatably attachable to one or more of the tower leg pieces. A rotatable platform allows an optimal positioning of the work platform relative to the off shore structure.

Preferably the work platform comprises a central opening with a crown for attaching the work platform around one or more of the tower leg pieces. According to this practical embodiment the work platform can be rotated around the tower.

According to another preferred embodiment the work platform comprises two parts, which are shiftable relative to one other in the plane of the work platform. According to this other embodiment the work platform can follow the contours of the off shore structure such that the off shore structure remains within reach.

In a practical embodiment the system according to the invention further comprises a drive for moving at least one of the leg pieces forming the tower upward and means for subsequently feeding a leg piece to the underside of the tower in line with the one or more leg pieces forming the tower.

According to another practical embodiment the lifting means comprise a drive attached to the work platform, which drive is arranged to engage on the leg pieces forming the tower to allow the work platform to climb along the tower.

Advantageously one drive may be used to form the tower as well as to lift the work platform along the tower. Preferably the drive comprises a jack-up system.

The invention also relates to a system in which the main platform is included.

The invention further relates to a method for installing a system according to the invention onto a main platform present at the water level, comprising the steps of:
a) mounting the work platform onto the main platform;
b) lifting the work platform relative to the main platform for positioning the work platform near the part of the off shore structure.

Further advantageous embodiments of the method according to the invention are described in further sub claims.

The present invention will now be explained referring to the attached drawings, in which:
Figures 1A and 1B show a view from the side respectively a view from above onto a preferred embodiment of the system according to the invention situated on a main platform in a first position of transport;
Figures 2A - 2D show a side view of the system according to figures 1A and 1B situated next to a wind turbine in different positions;
Figures 3A, 3B and 3C show the work platform as part of the system according to the invention in top view respectively side view;
Figures 4A - 4C show a view from the side on the system according to the invention in different positions of the work platform;
   And
Figure 5 shows the system according to the invention in a second position of transport.

In all figures corresponding elements are designated with corresponding reference numerals.

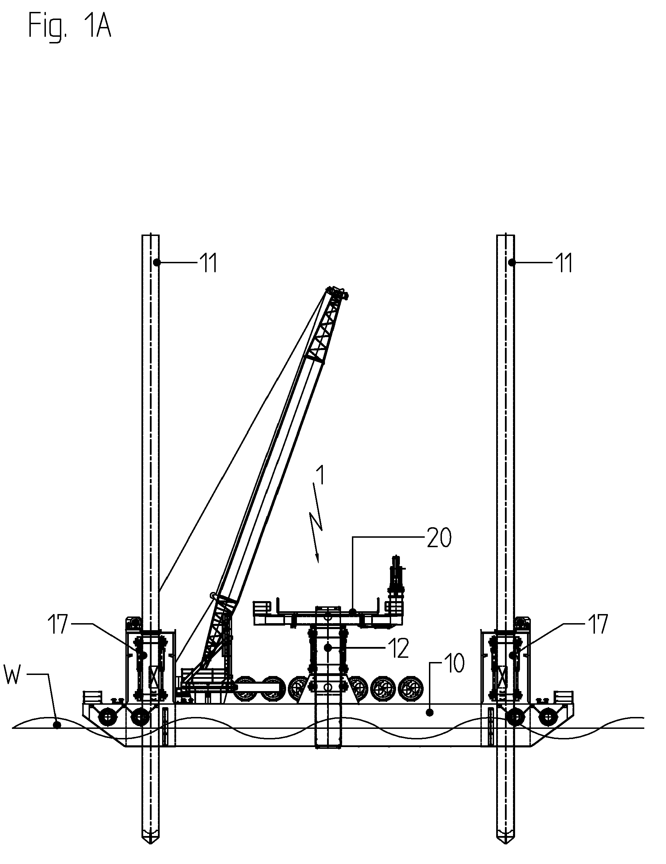

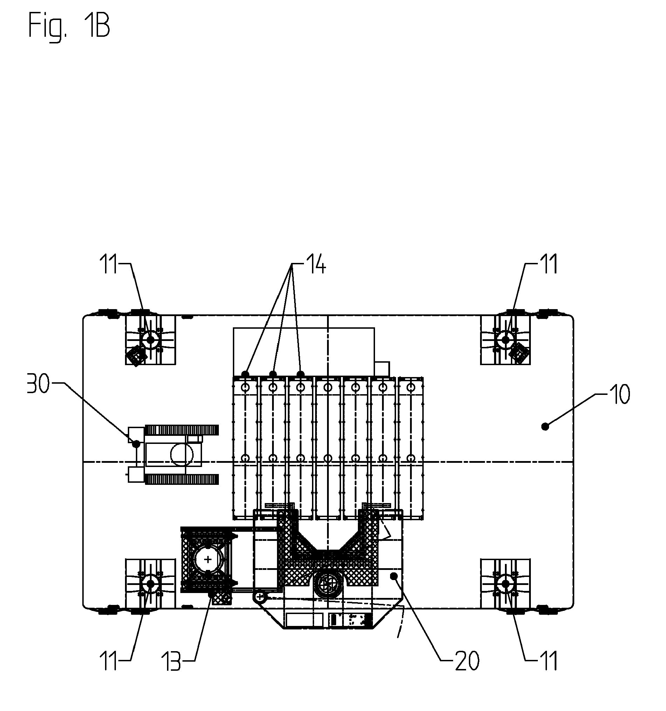

Figure 1A shows a side view of a system 1 according to the present invention in a first transport position. Figure 1B shows a top view on system 1 of figure 1A.

The system 1 according to the invention comprises a work platform 20 as well as positioning means 12, 13, 14 for mounting the work platform 20 onto a main platform 10.

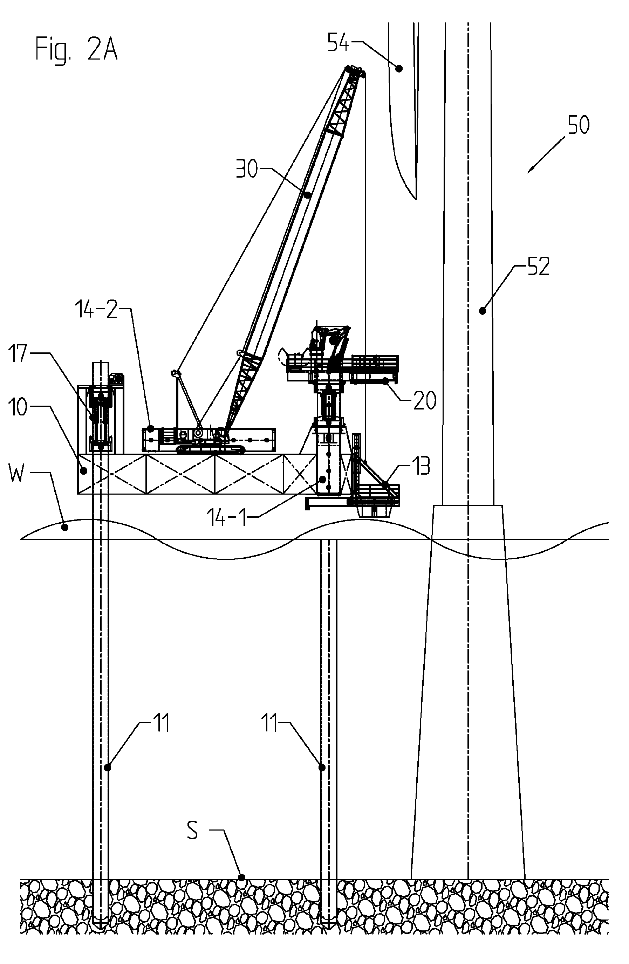

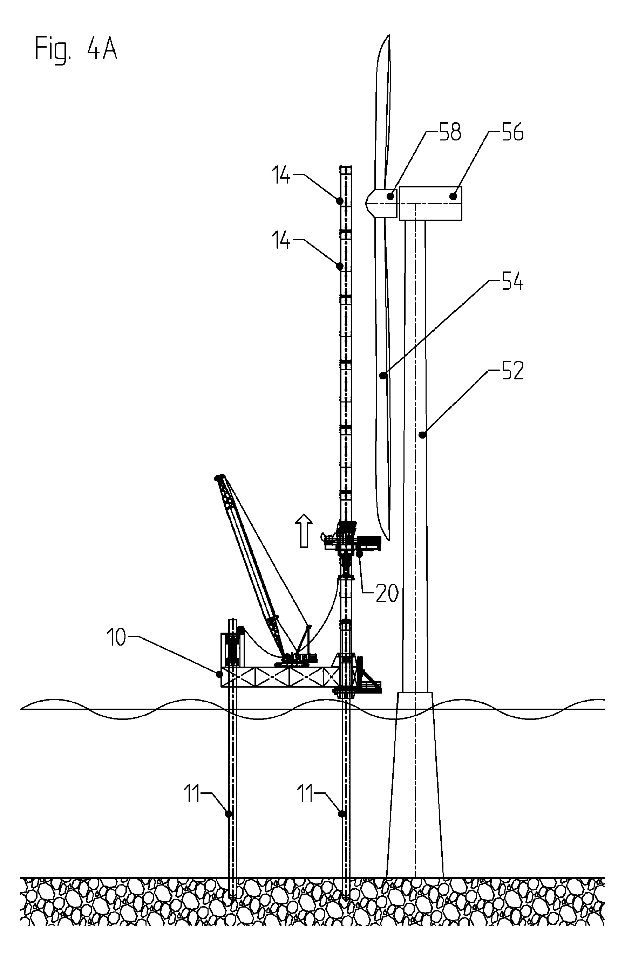

Main platform 10 may be selected from a number of known suitable platforms, such as the jack-up rig shown in the figures. Main platform 10 comprises a number of supporting legs 11 as well as a jack-up system 17 for raising or lowering the legs. In the first transport position the supporting legs 11 are up. Main platform 10 may then be self propelled or towed to a near offshore structure, such as a wind turbine. Upon arrival at the location of the off shore structure the legs are jacked down onto the seafloor (S). Then "preloading" takes place, where the weight of the platform and additional ballast water are used to drive the legs securely into the seabed so they will not penetrate further while operations are carried out. After preloading, the jack-up system is used to raise the entire platform above the water level (W) to a predetermined height or "air gap", so that wave, tidal and current loading acts only on the relatively slender legs and not on the hull. This position of use is shown in figures 2A - 2D and 4A - 4C. On board of the main platform 10 a generator is present for providing the necessary power i.e. electrical and/or hydraulic. Furthermore a first crane 30 is present.

The means for positioning the work platform 20 near a part of the wind turbine that needs work, such as maintenance or repair, will be referred to now. Said positioning means are generally arranged for mounting the work platform 20 onto the main platform 10 and for lifting the work platform 20 relative to the main platform 10. In the preferred embodiment shown the positioning means comprise a number of tower leg pieces 14 laying on the main platform 10 in the transport position and a drive 12 for building a tower with the tower leg pieces. The positioning means further comprise a feeding rack 13, which lies on deck of the main platform 10 during transport (see the first transport position in figure 1 B) and is positioned below deck (see figures 2A - 2D) prior to building the tower.

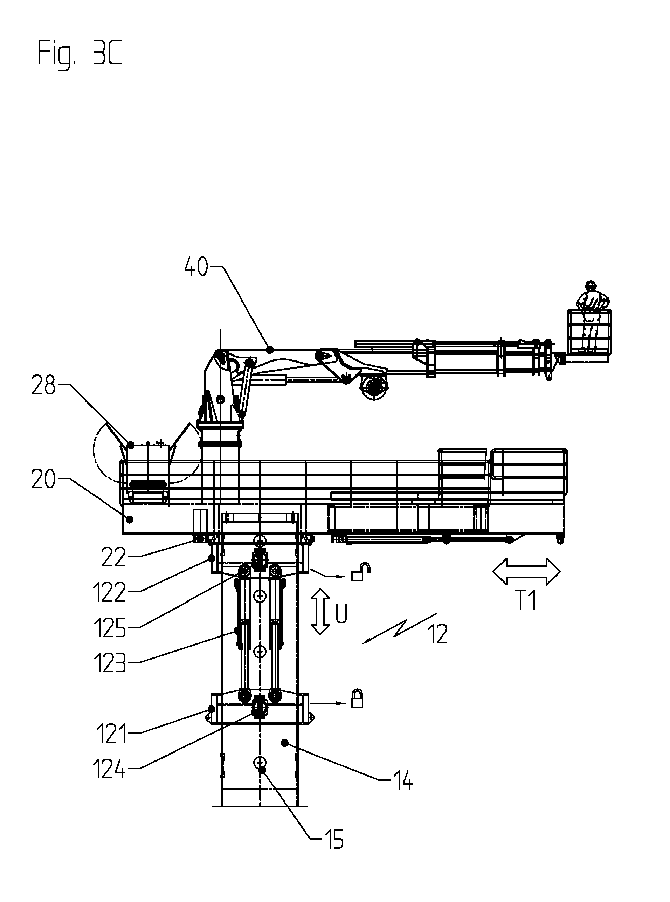

The building of the tower is illustrated referring to figures 2A - 2D. The tower leg pieces 14 are subsequently fed by means of the first crane 30 to the feeding rack 13 that is arranged to feed each leg piece to the underside of the work platform 20. A drive 12 is present for moving the second lowest leg piece 14 forming the tower upwards. Suitable drives are known in the art. One suitable drive is mentioned above as a jack-up system for jacking down the supporting legs of the main platform.The jack-up system may use a rack and pinion gear arrangement where the pinion gears are driven by a hydraulic or electric motor and the rack is affixed to the legs. A rack and pinion is a type of linear actuator that comprises a pair of gears which convert rotational motion into linear motion. The circular pinion engages teeth on a linear "gear" bar that forms the rack. As an alternative the jack-up system may use a pin and hole arrangement. This alternative is part of the preferred embodiment shown and will be described in more detail referring to figure 3C.

According to the preferred embodiment the work platform 20 comprises an opening 21 through which the tower leg pieces 14 can be pushed for forming the tower. In figure 2A a first leg piece 14-1 is already present in the opening 21 of the work platform 20. Crane 30 is loading a second leg piece 14-2.

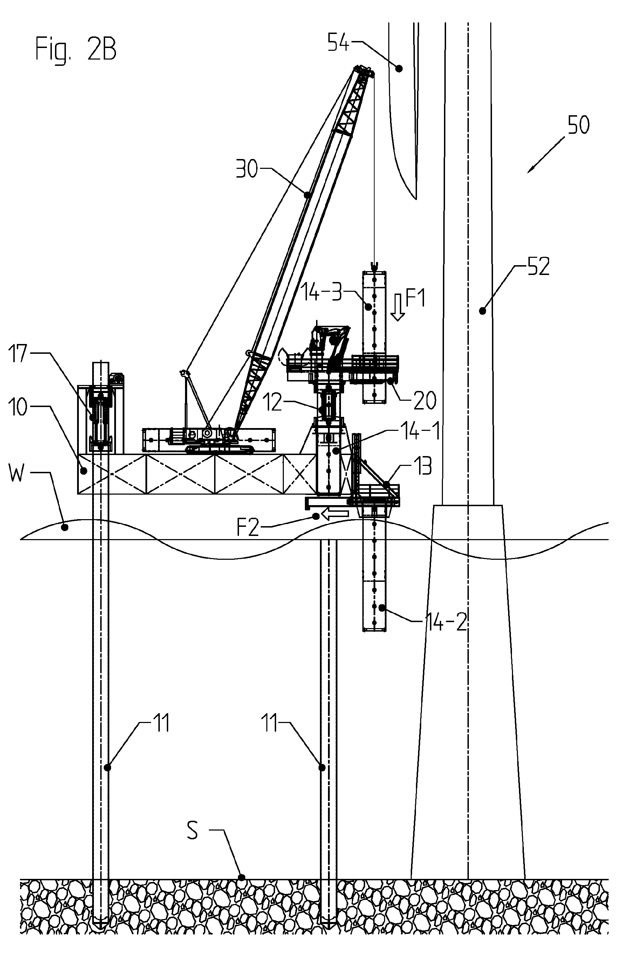

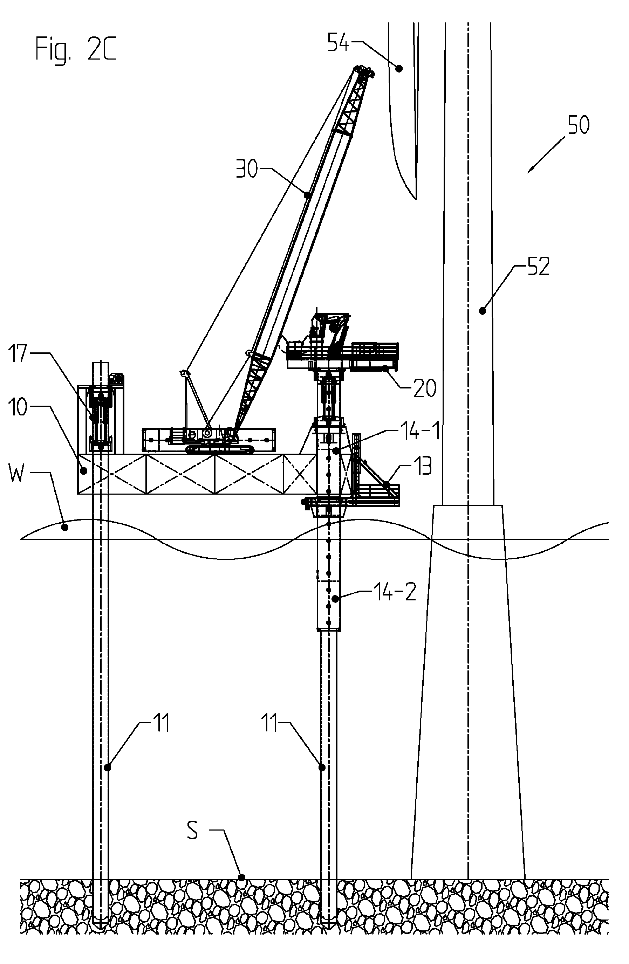

In figure 2B a second leg piece 14-2 is present in the feeding rack 13 to be fed in the direction F2. A third leg piece 14-3 is fed in the feeding rack 13 in the direction F1. In figure 2C the first leg piece 14-1 and the second leg piece 14-2 are connected in a known manner, e.g. by means of a bolt-flange connection.

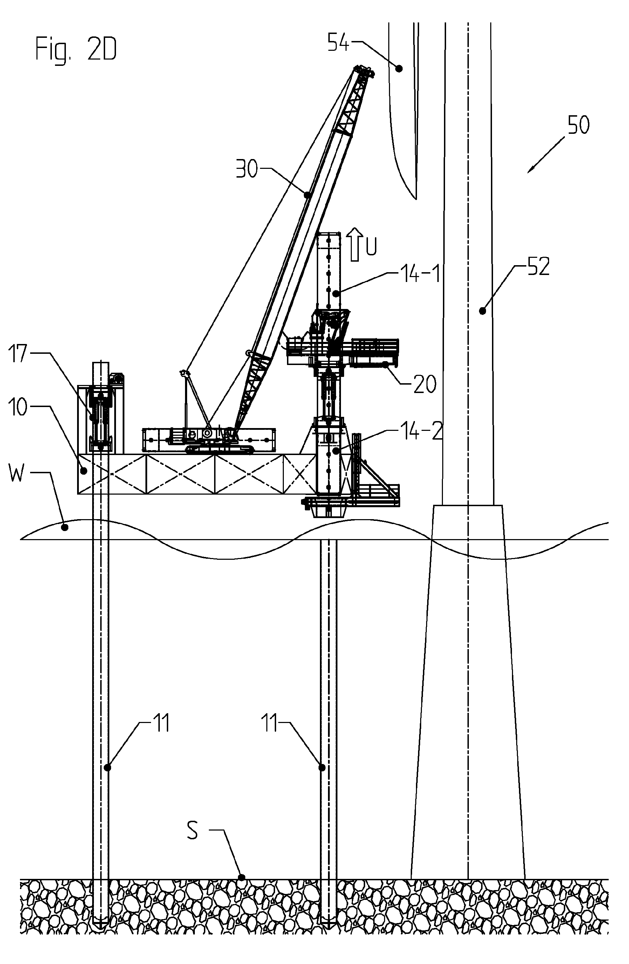

In figure 2D the tower formed of first leg piece 14-1 and the second leg piece 14-2 has been pushed upward by the drive 12 in the direction U.

The above steps are repeated until a tower having the desired length has been formed.

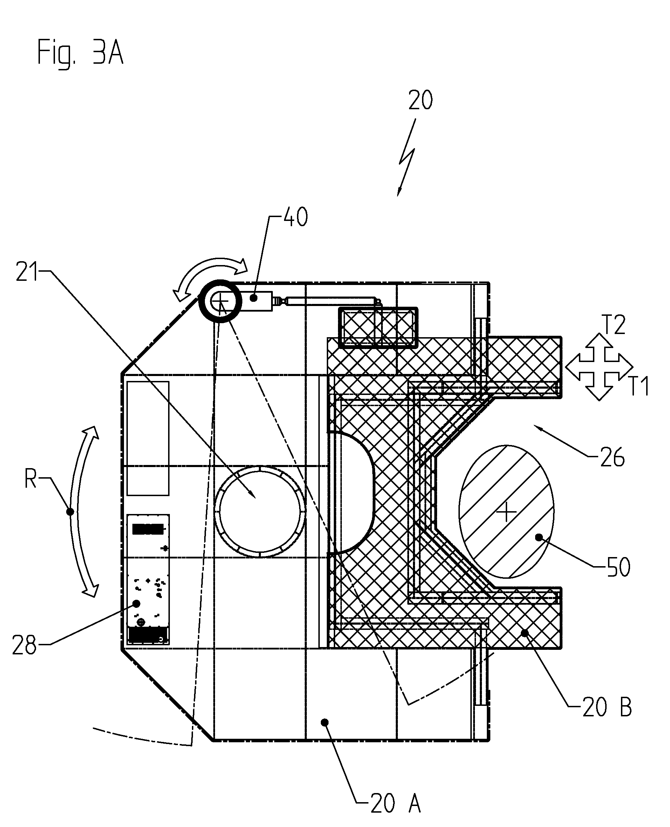

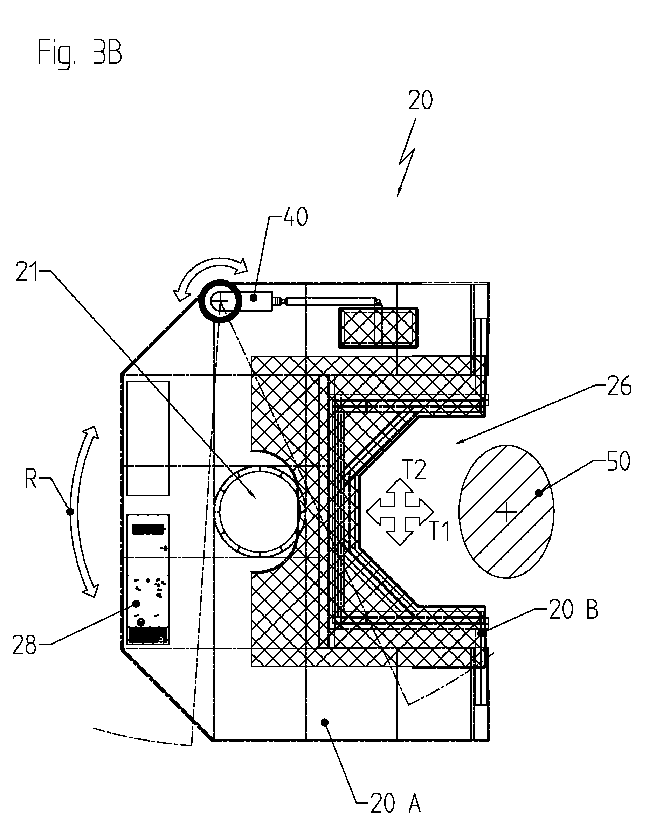

Figures 3A and 3B show the work platform 20 in two different positions in more detail in top view. In the opening 21 a crown 22 is present which allows a rotatable attachment of the work platform 20 to the leg pieces of the tower. The direction of rotation is denoted by arrow R. The work platform 20 comprises two parts 20A and 20B which are shiftable relative to one another in the plane of the work platform. More specifically part 20B is movable relative to part 20A along two independent directions of translation T1 and T2. In the preferred embodiment shown in figure 3A the work platform part 20B is moved close to the wind turbine 50. In figure 3B the work platform part 20B is moved into the retracted position.

Preferably work platform part 20B comprises a recess 26, which allows the work platform 20 in its entirety to be positioned as close as possible to the pile of the wind turbine 50.

Optionally on work platform 20 a second crane, preferably a man riding crane 40, is present. Furthermore a second generator 28 may be present for providing the necessary power i.e. electrical and/or hydraulic power to allow the work platform to operate in a self supporting manner.

Figure 3C shows the work platform 20 in side view. The drive 12 for lifting the tower is illustrated. In the preferred embodiment shown drive 12 forms an integral part of the work platform 20. Drive 12 functions as a pin and hole elevating arrangement that allows for upward movement of the leg pieces in discrete steps. Drive 12 comprises a travelling ring or cross head 121 and a fixed ring or cross head 122 that are mutually connected by means of actuators, such as cylinders 123. On both crossheads locking pins 124 respectively 125 are present to be driven in and out of the holes 15 present in the tower leg pieces 14 in turns. Suitable locking pins may comprise an integrated sensor guided actuator.

Jack-up system 17 mentioned above for raising and lowering the supporting legs comprises similar components and functions in a similar manner.

Suitable pin and hole elevating arrangements are known per se in the art. It is noted that applicant already produces jack-up systems for raising and lowering supporting legs of a main platform, such as a jack-up rig or a pontoon like structure, in which the fixed cross head is situated on deck of the platform and the travelling cross head is situated above the fixed cross head. An inverted version of said jack-up system is suitable as drive 12.

Figures 4A - 4C show movement of the work platform 20 along the tower of leg pieces 14. Once the tower is finished, it will be secured to the main platform with suitable securing means, such as locking pins. The drive 12 used to lift the tower leg pieces 14 upward for forming the tower (as described referring to figures 2A-2D and 3C) may now be used to let the work platform 20 climb discrete steps along the tower. Once the work platform 20 approaches the desired position, the actuators 123 can then optionally be used to position the work platform 20 exactly into the desired position.

The offshore structure that needs work is in this example a wind turbine 50 having a pile 52 situated on the seabed. Blades 54 are connected to the rotor 58 and nacelle 56.

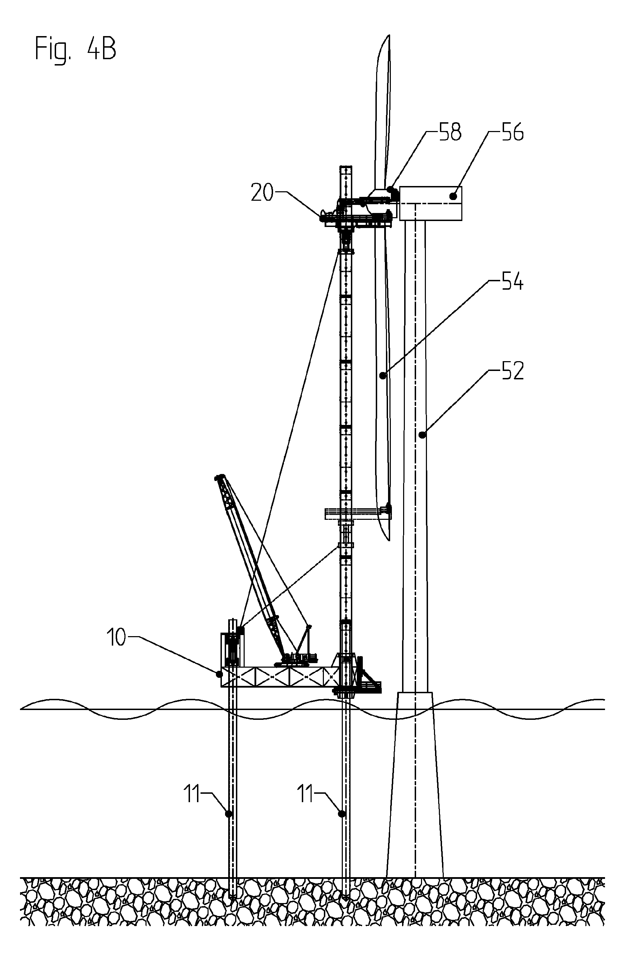

The tower reaches up till the height of the rotor 58 as shown in figure 4A. In figure 4B work platform part 20B is translated towards the rotor. This position is such that work can be performed on the rotor 58 while standing on the platform 20. If necessary the man riding crane 40 may be used.

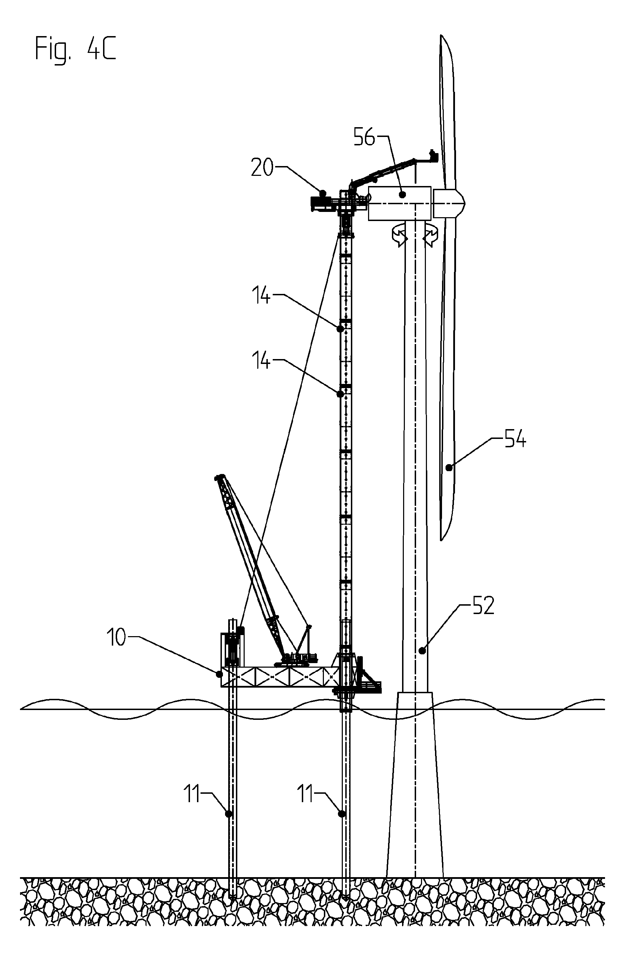

In figure 4C the nacelle and rotor blades are rotated 180 degrees around the mono pile 52. The work platform part 20B is translated over the work platform part 20A to its retracted position. The nacelle 56 of the wind turbine 50 can be reached from the work platform 20. Man riding crane 40 can be used to perform work on the nacelle.

The work performed on the wind turbine may range from light work, such as painting or performing small repairs, to heavy work, such as replacement of parts, such as rotor blades or the head of the nacelle, even with blades attached.

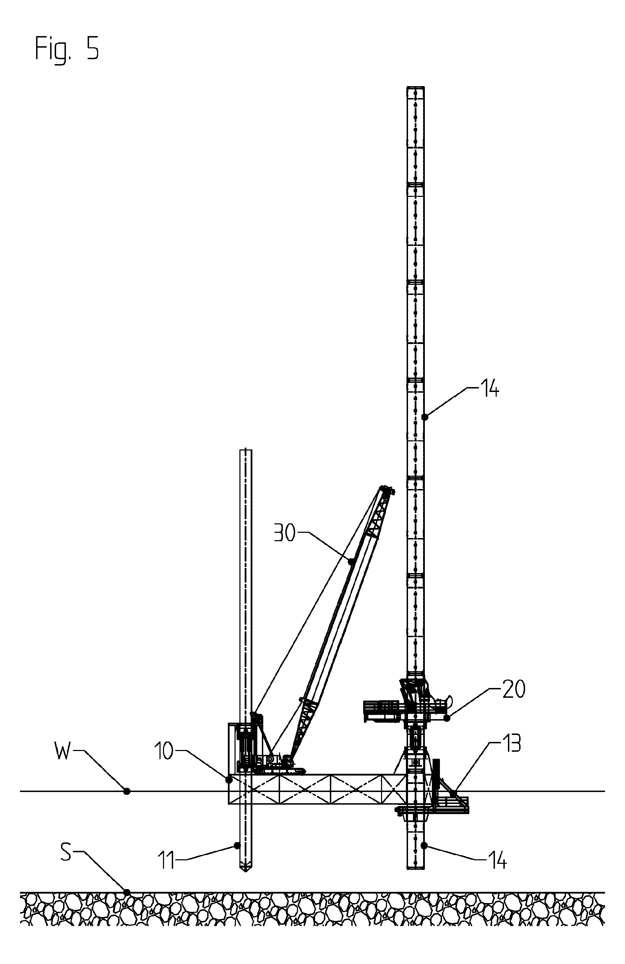

Figure 5 shows a second position of transport for the main platform 10 with the system according to the invention. Wind turbines are usually situated in large numbers in a wind park. Once the main platform 10 with the system according to the invention is present in the wind park it may be economically to perform all work, such as maintenance or repair, on more than one wind turbine. In the second position of transport the tower of leg pieces 14 remains up right and the work platform 20 is lowered down along the tower to its lowest position shown in figure 5. The supporting legs are jacked-up out of the seabed into the transport position. The main platform 10 may now be moved, self propelled or towed by another vessel, to another location, near a further wind turbine in the wind park for performing work thereon.

The invention is of course not limited to the described and shown preferred embodiment. Although the invention is illustrated in light of performing work on a wind turbine, it is also suitable for application relating to other off shore structures, such as long bridges and drilling platforms. Furthermore although the main platform is illustrated as a jack-up rig other types of platforms may be used in combination with the system according to the invention as well, for instance semi-submersibles, such as pontoon-like structures. The invention thus relates generally to any embodiment falling within the scope of protection as defined in the claims and as seen in the light of the foregoing description and accompanying drawings.

## Claims

1. System for facilitating work, such as maintenance or repair, to be performed on part of an off shore structure, such as a wind turbine, which part is situated above water level, which system comprises:
a) a work platform;
b) means for positioning the work platform near the part of the off shore structure,
**characterized in that**, the positioning means are arranged for mounting the work platform onto a main platform to be situated at the water level, and for lifting the work platform relative to the main platform.

2. System according to claim 1, wherein the positioning means comprise leg pieces for forming a tower onto the main platform and means for attaching the work platform to the tower and means for lifting the work platform along the tower.

3. System according to claim 2, wherein the work platform is rotatably attachable to one or more of the tower leg pieces.

4. System according to claim 2 or 3, wherein the work platform comprises a crown for attaching the work platform around one or more of the tower leg pieces.

5. System according to one or more of the preceding claims, wherein the work platform comprises two parts, which are shiftable relative to one another in the plane of the work platform.

6. System according to one or more of the preceding claims 2 through 5, wherein the positioning means comprise a drive arranged to engage on at least one of the leg pieces forming the tower for moving the tower upward and means for subsequently feeding a leg piece to the underside of the tower in line with the one or more leg pieces forming the tower.

7. System according to one or more of the preceding claims 2 through 6, wherein the lifting means comprise a drive attached to the work platform, which drive is arranged to engage on the leg pieces forming the tower to allow the work platform to climb along the tower.

8. System according to claim 6 or 7, wherein the drive comprises a jack-up system.

9. System according to claim 6, 7 or 8, wherein the drive comprises a travelling ring and a fixed ring that are mutually connected by means of actuators, wherein each ring comprises at least one pin to be driven in and out of holes present in the tower leg pieces.

10. System according to one or more of the preceding claims, wherein the system further comprises the main platform.

11. Method for installing a system according to one or more of the preceding claims onto a main platform present at the water level, comprising the steps of:
a) mounting the work platform onto the main platform;
b) lifting the work platform relative to the main platform for positioning the work platform near the part of the off shore structure.

12. Method according to claim 11 referring to the system of claim 2, whereby step a) comprises the steps of:
a1) forming a tower of leg pieces onto the main platform;
a2) attaching the work platform to the tower.

13. Method according to claim 12, whereby step a1) comprises the steps of:
a11) moving at least one of the leg pieces forming the tower upward;
a12) subsequently feeding a leg piece to the underside of the tower in line with the one or more leg pieces forming the tower; and
a13) repeating steps a11 and a12 until the tower is completed.

14. Method according to claim 12 or 13, whereby step b) comprises the step of b1) lifting the work platform along the tower.
